# NEUE EUROPÄISCHE PATENTSCHRIFT

(11) **EP 1 710 883 B2**
(45) Veröffentlichungstag und Bekanntmachung des Hinweises auf die Entscheidung über den Einspruch: **29.08.2012**
(45) Hinweis auf die Patenterteilung: 19.08.2009
(21) Anmeldenummer: 06110888.2
(22) Anmeldetag: 09.03.2006
(51) Int. Cl.: H02G 3/30

(54) **Klemmfeder zur Befestigung elektrischer oder anderer Leitungen in Mauerschlitzen.**
Fastening devices for fixing electrical or other conductors in wallslots
Borne de plume pour fixer (l'installation) des lignes électriques (ou autres) dans des fentes du mur.

(43) Veröffentlichungstag der Anmeldung: 11.10.2006
(73) Patentinhaber: Meyer, Wilhelm, 31655 Stadthagen (DE)
(72) Erfinder: Meyer, Wilhelm, 31655 Stadthagen (DE)

(56) Entgegenhaltungen:
- EP-A- 0 758 065
- EP-A- 0 937 929
- DE-U1- 29 516 068
- DE-U1- 29 922 018
- DE-U1-202004 010 004
- NL-A- 9 002 656

## Beschreibung

Die Aufgabenstellung bei der Erfindung bestand darin, bei der Verlegung von Leitungen in gefrästen Mauerschlitzen für Monteure eine Erleichterung sowie eine Zeitersparnis bei der Montage zu erreichen und dabei keine Werkzeuge zu benötigen.

Diese Arbeit wurde bisher mit großem Zeit-, Material- und Arbeitsaufwand bewerkstelligt, durch Festgipsen, Bohren, Nageln mit Nägeln verschiedener Längen, die bevorratet werden müssen wobei ein Hammer benötigt wird, oder mittels umständlich einzusetzenden Schellen, also mit Materialien und Werkzeugen verschiedenster Art.

Somit handelt es sich bei der Erfindung um ein erheblich komfortableres und schnelleres Verfahren bei der Verlegung von Leitungen in Mauerschlitzen.

Der Stand der Technik nach DE-U1-29922018 zeigt eine ringähnliche Spreizklemme (1) aus elastischem Kunststoff mit zwei an der Ringfläche gegenüberliegenden Löchern zwecks Betätigung durch ein Werkzeug. Nach Einstecken z. B. der Spitzen einer Telefonzange und Zusammendrücken zu einem Oval wird die Spreizklemme in den Mauerschlitz eingeführt und fixiert nach dem Loslassen durch ihre Klemmwirkung die darunter liegenden Leitungen (vgl. D2, Seite 2, Absätze 1 und 2). Dabei besteht jedoch die Gefahr, mit den Zangenspitzen die Kabelisolation zu beschädigen.

Der Gegenstand der vorliegenden Anmeldung enthält eine einzige, innerhalb der Spreizklemme am Rand integrierte Öse nach Anspruch 1, die eine bestimmte Lochgröße voraussetzt, die mit der Größe der an Telefonzangenspitzen angepassten Löcher bzw. Vertiefungen nicht vergleichbar ist. Die Spreizklemme wird somit nicht mit einer Zange betätigt.

Die Größe der Öse einer Klemmfeder nach Anspruch 1 ermöglicht zwecks Fixierung ein werkzeugloses Ziehen bzw. Zusammendrücken der Spreiz- bzw. Federklemme. Dadurch wird ein komfortableres und schnelleres Verlegeverfahren von Leitungen in Mauerschlitzen erreicht.

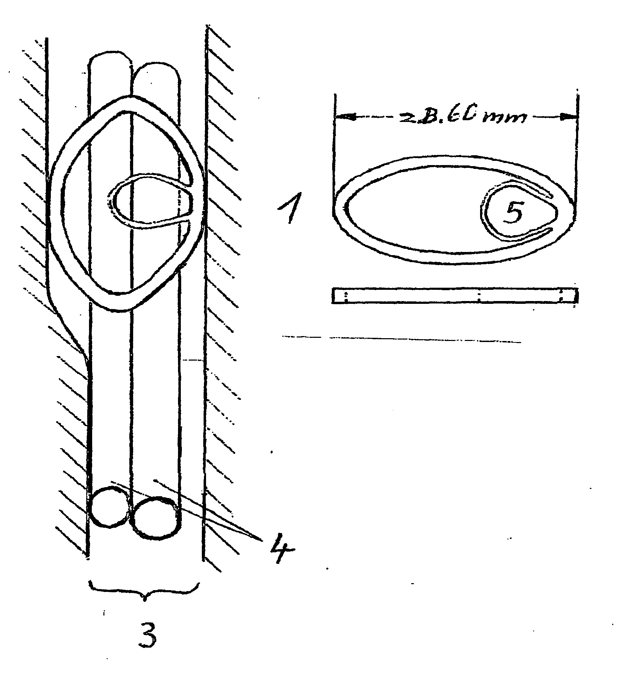

## Patentansprüche

1. Klemmfeder (1) in Ellipsenform aus Kunststoff zur Fixierung von in gefrästen Mauernuten und/oder -Schlitzen (3) verlegten Leitungen (4) bei Elektro- und/oder Sanitärinstallationen. Zur Montageerleichterung ist innerhalb der Ellipse nur eine einzige Öse(5) integriert, die eine werkzeuglose Zugbetätigung beim seitlichen Hereinstecken und Festklemmen im Mauerschlitz möglich machen soll,
**dadurch gekennzeichnet,**
**dass** die Klemmfeder (1) quer um das/die Kabel im Schlitz (3) gelegt wird und mit Hilfe der Öse (5) nach einer Seite zusammengezogen und beim Loslassen im Schlitz festgeklemmt wird, so dass die Leitungen nicht mehr herausfallen können.

2. Klemmfeder nach Anspruch 1
**dadurch gekennzeichnet,**
**dass** die Klemmfeder auch aus anderen Werkstoffen und in verschiedenen Größen hergestellt werden kann, um alle vorkommenden Schlitzbreiten und -tiefen zu bedienen.

## Claims

1. This claim is for an elliptical fastening clip (1) made of plastic. It is to be used to hold electrical and/or sanitary cables (4) in machined milled wall slits and/or notches (3). One single eyelet (5) is integrated into the edge of the fastening clip. This facilitates more convenient tool-free insertion of the fastening clip into the wall slot.
characteristic:
the fastening clip is flexible so it can be bent cross the cables when inserted by the help of the eyelet (5) into the wall slot, thereby gripping the cables. The cables are then fixed in place by the clamping forces of the clip

2. The fastening clip described in Claim 1 can also be manufactured from alternative materials and/or made in various sizes to match any and all different slot widths and/or depths.

## Revendications

1. Ressort de serrage (1) de forme elliptique en matière plastique pour la fixation des conduites posées (4) dans les rainures fraisées et/ou les fentes murales (3) concernant les installations électriques et/ou sanitaires. Pour faciliter le montage, un seul oeillet est intégré dans l'ellipse, qui rend possible d'engager et de bloquer latéralement l'ellipse dans la fente murale lors d'une seule traction sans aucun outil,
**caractérisé en ce**
**que** le ressort de serrage (1) sera posé transversalement au(x) câble(s) dans la fente (3) et sera contracté d'un côté à l'aide de l'oeillet (5) qui le sert dans la fente par relâchement, afin que les conduites soient tenues.

2. Ressort de serrage selon recours 1 est
**caractérisé en ce**
**que** le ressort de serrage peut être fabriqué à partir d'autres matériaux et dans différentes tailles pour desservir toutes les largeurs et profondeurs de fentes qui se présentent.
